# EUROPEAN PATENT APPLICATION

(11) **EP 4 404 517 A1**
(43) Date of publication of application: **24.07.2024**
(21) Application number: 22869148.1
(22) Date of filing: 09.09.2022
(51) Int. Cl.: H04L 27/26

(54) **SIGNAL SENDING METHOD, SIGNAL RECEIVING METHOD, ELECTRONIC DEVICE, AND STORAGE MEDIUM**

(30) Priority: 14.09.2021 CN 202111076402
(71) Applicant: ZTE Corporation, Shenzhen, Guangdong 518057 (CN)
(72) Inventor: MA, Yihua, Shenzhen, Guangdong 518057 (CN); YUAN, Zhifeng, Shenzhen, Guangdong 518057 (CN); XIA, Shuqiang, Shenzhen, Guangdong 518057 (CN); YU, Guanghui, Shenzhen, Guangdong 518057 (CN); HU, Liujun, Shenzhen, Guangdong 518057 (CN)
(74) Representative: Regimbeau
(86) International application number: PCT/CN2022/118211
(87) International publication number: WO 2023/040779

(57) **Abstract**

Disclosed are a signal sending method, a signal receiving method, an electronic device, and a storage medium. The signal sending method includes generating a first transmission signal, where the first transmission signal includes a communication signal and a sensing signal and at least two periodic repetitions of the sensing signal exist within the time period of each orthogonal frequency-division multiplexing symbol in the time domain, and sending the first transmission signal.

## Description

### TECHNICAL FIELD

The present application relates to the field of radio communication technology, for example, a signal sending method, a signal receiving method, an electronic device, and a storage medium.

### BACKGROUND

With the development of communication technology, the communication spectrum is gradually moving towards millimeter waves and terahertz waves, resulting in the overlap between a communication spectrum in future and a sensing spectrum in tradition. In future development, it is necessary to consider the integration of communication and sensing in the implementation of the communication-sensing integration technology for joint scheduling of communication resources and sensing resources. The manners for implementing efficient communication-sensing integration includes the following two: in a manner 1, an orthogonal frequency-division multiplexing (OFDM) signal is used for implementing sensing signals, for example, two orthogonal sensing signals are generated through OFDM; and in a manner 2, an orthogonal basis based on sensing signals is used for replacing a Discrete Fourier Transform (DFT) orthogonal basis in OFDM, and a transceiving structure similar to DFT-spread-OFDM (DFT-s-OFDM) may be used for signal sending. However, in both the aforementioned solutions, multiple sensing signals may be generated. The superimposing of the multiple sensing signals makes that it is difficult for a receiving end to distinguish which sensing signal that an echo belongs to.

### SUMMARY

A main object of embodiments of the present application is to provide a signal sending method, a signal receiving method, an electronic device, and a storage medium.

An embodiment of the present application provides a signal sending method. The signal sending method includes generating a first transmission signal, where the first transmission signal includes a communication signal and a sensing signal and at least two periodic repetitions of the sensing signal exist within a time period of each orthogonal frequency-division multiplexing symbol in a time domain, and sending the first transmission signal.

An embodiment of the present application further provides a signal receiving method. The signal receiving method includes receiving a first received signal, where the first received signal comprises a communication signal and a sensing signal and at least two periodic repetitions of the sensing signal exist within a time period of each orthogonal frequency-division multiplexing symbol in a time domain, and processing the first received signal.

An embodiment of the present application further provides an electronic device. The electronic device includes one or more processors and a memory.

The memory is configured to store one or more programs, where the one or more programs, when executed by the one or more processors, cause the one or more processors to perform the signal sending method described in any embodiment of the present application or the signal receiving method described in any embodiment of the present application.

One or more processors and a memory are provided. The memory is configured to store one or more programs, where the one or more programs, when executed by the one or more processors, cause the one or more processors to perform the signal sending method described in any embodiment of the present application or the signal receiving method described in any embodiment of the present application.

### BRIEF DESCRIPTION OF DRAWINGS

FIG. 1 is a flowchart of a signal sending method according to an embodiment of the present application.
FIG. 2 is another flowchart of a signal sending method according to an embodiment of the present application.
FIG. 3 is a schematic diagram of a first transmission signal according to an embodiment of the present application.
FIG. 4 is a schematic diagram of bandwidth parameters according to an embodiment of the present application.
FIG. 5 is another schematic diagram of a first transmission signal according to an embodiment of the present application.
FIG. 6 is another schematic diagram of a first transmission signal according to an embodiment of the present application.
FIG. 7 is another schematic diagram of a first transmission signal according to an embodiment of the present application.
FIG. 8 is a flowchart of a signal receiving method according to an embodiment of the present application.
FIG. 9 is another flowchart of a signal receiving method according to an embodiment of the present application.
FIG. 10 is another flowchart of a signal receiving method according to an embodiment of the present application.
FIG. 11 is a schematic diagram of processing a first received signal according to an embodiment of the present application.
FIG. 12 is a schematic diagram of detecting a pulse signal according to an embodiment of the present application.
FIG. 13 is a schematic diagram of detecting a correlation sequence according to an embodiment of the present application.
FIG. 14 is a schematic diagram of processing a frequency modulated continuous wave (FMCW) signal according to an embodiment of the present application.
FIG. 15 is another schematic diagram of processing a first received signal according to an embodiment of the present application.
FIG. 16 is a structural diagram of a signal sending apparatus according to an embodiment of the present application.
FIG. 17 is a structural diagram of a signal receiving apparatus according to an embodiment of the present application.
FIG. 18 is a structural diagram of an electronic device according to an embodiment of the present application.

### DETAILED DESCRIPTION

The embodiments described herein are intended to explain the present application but not to limit the present application.

Suffixes such as "module", "component", or "unit" used for indicating elements in the subsequent description are used only for facilitating the description of the present application and have no particular meaning in themselves. Therefore, "module", "component", or "unit" may be used in a mixed manner.

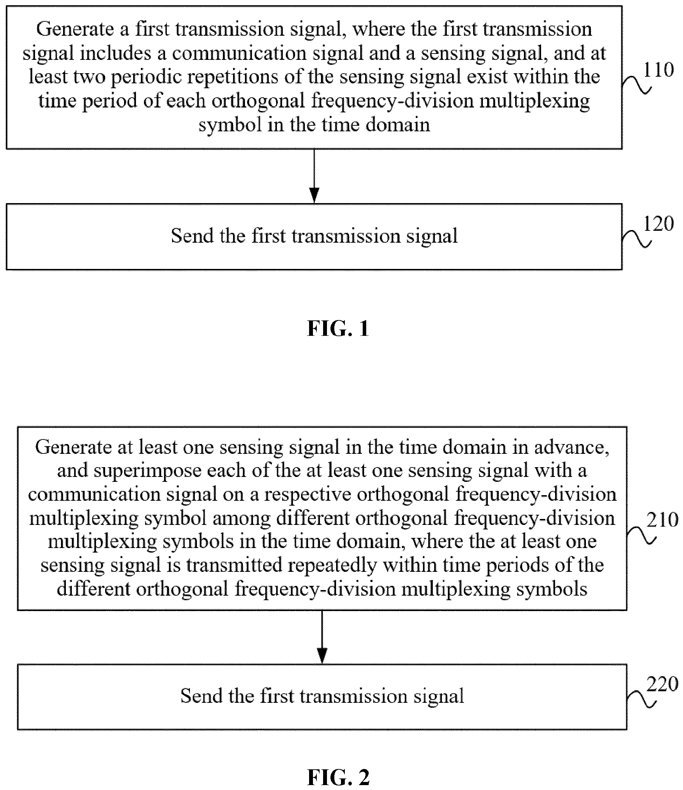

FIG. 1 is a flowchart of a signal sending method according to an embodiment of the present application. The embodiment of the present application is applicable to sending communication-sensing integration signals. The signal sending method may be performed by an information sending apparatus. The apparatus may be implemented by software and/or hardware. Referring to FIG. 1, the signal sending method provided in the embodiment of the present application includes the operations below.

In operation 110, a first transmission signal is generated. The first transmission signal includes a communication signal and a sensing signal. At least two periodic repetitions of the sensing signal exist within the time period of each orthogonal frequency-division multiplexing symbol in the time domain.

The first transmission signal may be a communication-sensing integration signal. The first transmission signal may be a signal that integrates functions of communication and sensing. The first transmission signal may have functions of both the communication signal and the sensing signal. The first transmission signal may actively recognize and analyze characteristics of a radio channel while transmitting information on the radio channel, thereby perceiving physical characteristics of the surrounding environment and achieving the sensing function. The sensing signal may be a signal for perceiving physical characteristics of the surrounding environment and may be a part of the first transmission signal. A signal may vary with time in the time domain. An orthogonal frequency-division multiplexing (OFDM) symbol may be a periodic waveform within a time period in the time domain. The periodic waveform may be modulated. A periodic repetition may indicate that the sensing signal is transmitted repeatedly within the time period of one OFDM symbol.

In the embodiment of the present application, the first transmission signal including the communication signal and the sensing signal may be generated. The first transmission signal may be a communication-sensing integration signal. The sensing signal included in the first transmission signal may be sent repeatedly at least twice with the time corresponding to each OFDM symbol in the time domain. That is, at least two periodic repetitions of the sensing signal exist within the time period corresponding to each OFDM of the first transmission signal.

In operation 120, the first transmission signal is sent.

The generated first transmission signal may be sent to achieve the transmission of the communication-sensing integration signal.

On the basis of the aforementioned embodiment of the present application, the sensing signal is configured to acquire channel information and environmental information. The environmental information includes at least one of: distance information, Doppler information, frequency information, angle information, or imaging information.

The channel information may be the information reflecting the quality of the communication signal of a signal sending end. The environmental information may be the information reflecting the surrounding environment of the signal sending end.

In the embodiment of the present application, the sensing signal may be configured to acquire the channel information used by the communication signal and the environmental information of the surrounding environment. The environmental information of the surrounding environment may include one or more of distance information, Doppler information, frequency information, angle information, or imaging information. It is to be understood that the distance information may be the distance between the signal sending end and another obstacle. The Doppler information may be the information for perceiving a movement or location in the surrounding environment by using the Doppler effect. The frequency information may be the frequency of the first transmission signal. The angle information may be the angle of an object in the surrounding environment with the signal sending end. The imaging information may be the image of an object in the surrounding environment determined by using the sensing signal.

On the basis of the aforementioned embodiments of the present application, the communication signal and the sensing signal are located in different subcarriers for orthogonal frequency-division multiplexing.

The communication signal in the first transmission signal and the sensing signal in the first transmission signal may occupy different subcarriers of the first transmission signal in the orthogonal frequency-division manner. A subcarrier occupied by the sensing signal is different from a subcarrier occupied by the communication signal.

On the basis of the aforementioned embodiments of the present application, the number of periodic repetitions is N = 2^{m}, where m is a positive integer.

In the embodiment of the present application, the number of sending times of the sensing signal may be 2^{m} within the time period corresponding to each orthogonal frequency-division multiplexing symbol of the first transmission signal, where m is a positive integer.

On the basis of the aforementioned embodiments of the present application, the signal sending method further includes aggregating at least two carriers to form the sensing signal.

The sensing signal may be formed by aggregating multiple carriers. The transmission of the sensing signal may use at least two component carriers.

FIG. 2 is another flowchart of a signal sending method according to an embodiment of the present application. The embodiment of the present application is described based on the aforementioned embodiments of the present application. Referring to FIG. 2, the signal sending method provided in the embodiment of the present application includes the operations below.

In operation 210, at least one sensing signal is generated in the time domain in advance and each of the at least one sensing signal is superimposed with a communication signal on a respective orthogonal frequency-division multiplexing symbol among different orthogonal frequency-division multiplexing symbols in the time domain. The at least one sensing signal is transmitted repeatedly within time periods of the different orthogonal frequency-division multiplexing symbols.

In the embodiment of the present application, one or more sensing signals may be generated in the time domain in advance. Moreover, each sensing signal is superimposed with a corresponding communication signal within the time period corresponding to a respective orthogonal frequency-division multiplexing symbol occupied by the sensing signal to implement the generation of a first transmission signal. A sensing signal may be transmitted repeatedly at least twice within the time period of the corresponding orthogonal frequency-division multiplexing symbol.

In 220, the first transmission signal is sent.

In the embodiment of the present application, a sensing signal is generated in the time domain in advance and is superimposed with a communication signal within a respective time period of the time periods of different orthogonal frequency-division multiplexing symbols to implement the generation of the first transmission signal. Each sensing signal may be transmitted repeatedly within the time period corresponding to the respective orthogonal frequency-division multiplexing symbol. The processing complexity of the generation process of the first transmission signal is reduced by generating each sensing signal in advance, thereby reducing the performance overhead of a signal sending end and improving the quality of signal sending.

On the basis of the aforementioned embodiments of the present application, the sensing signal occupies a transmission bandwidth of the first transmission signal in the frequency domain and a protection bandwidth of the first transmission signal in the frequency domain or occupies the transmission bandwidth of the first transmission signal in the frequency domain.

The sensing signal may occupy the transmission bandwidth of the first transmission signal and the protection bandwidth of the first transmission signal in the frequency domain. Alternatively, the sensing signal may only occupy the transmission bandwidth of the first transmission signal but not occupy the protection bandwidth of the first transmission signal in the frequency domain.

On the basis of the aforementioned embodiments of the present application, the sensing signal includes at least one of: a frequency modulated continuous wave-based signal, a pulse-based signal, or a low correlation sequence-based signal.

In the embodiment of the present application, the sensing signal may be a frequency modulated continuous wave (FMCW)-based signal, a pulse-based signal, or a low correlation sequence-based signal. The pulse-based signal may be a discrete signal with periodic characteristics. The low correlation sequence-based signal may be a signal transmitted according to a sequence with low correlation.

On the basis of the aforementioned embodiments of the present application, the frequency modulated continuous wave-based signal includes at least one of: a linear sawtooth-wave frequency modulation signal, a linear triangular-wave frequency modulation signal, or a segmental linear frequency modulation signal.

The sensing signal in the first transmission signal may include a linear sawtooth-wave frequency modulation signal, a linear triangular-wave frequency modulation signal, and a segmental linear frequency modulation signal.

On the basis of the aforementioned embodiments of the present application, the low correlation sequence-based signal includes at least one of the following sequences: a pseudo-random sequence, a Gold sequence, or a Zadoff-Chu sequence.

In the embodiment of the present application, the sensing signal may be a signal transmitted based on a pseudo-random sequence, a signal transmitted based on a Gold sequence, or a signal transmitted based on a Zadoff-Chu sequence.

On the basis of the aforementioned embodiments of the present application, the duty cycle P of the sensing signal is in the range of 0 < P ≤ 100%.

The duty cycle may be a ratio of the power-on time to the total time in the transmission cycle of the sensing signal.

The duty cycle of the sensing signal may be in the range of 0 to 100%, including 100% but not including 0.

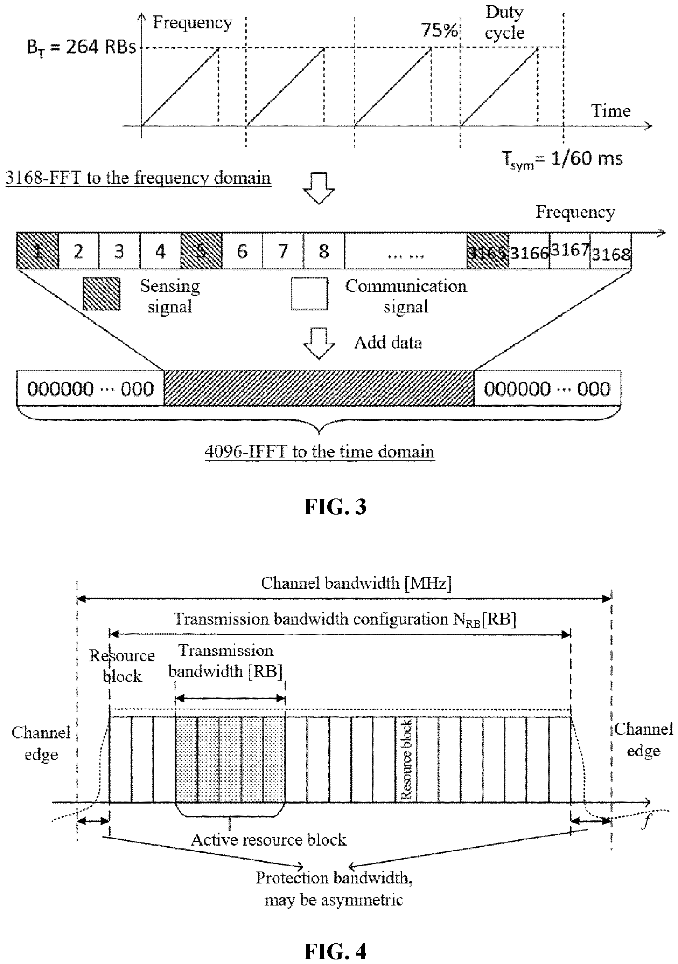

In an exemplary embodiment, the sensing signal of the first transmission signal is composed of four sawtooth Chirp signals sent on the transmission bandwidth of 200 MHz within the time period of one symbol, with the subcarrier spacing of 60 kHz. The sensing signal only occupies the transmission bandwidth of the first transmission signal. FIG. 3 is a schematic diagram of a first transmission signal according to an embodiment of the present application. Referring to FIG. 3, the transmission bandwidth in the embodiment of the present application may be 264 resource blocks (RBs), and the protection bandwidth on each side is 4930 kHz. For definitions of the channel bandwidth, the transmission bandwidth and the protection bandwidth, reference may be made to FIG. 4. In the embodiment of the present application, the sensing signal may occupy only the transmission bandwidth.

Multiple types of sensing signals may be synthesized through carrier aggregation. The sensing signal includes but is not limited to an FMCW-based signal, a pulse-based signal, and a low correlation sequence-based signal. A linear sawtooth-wave frequency modulation signal is taken as an example for description here. It is assumed that the four-period linear sawtooth-wave frequency modulation signal is included within the time T_{sym} of one OFDM symbol, where T_{sym} = 1/60 ms. The duty cycle of the signal is 75%. The sensing signal has four repetitions in one OFDM symbol period. Accordingly, the sensing signal is sparse in the frequency domain, and there is only one non-zero value every four points. To make the sensing signal in the transmission bandwidth, the number of time-domain sampling points of the sensing signal in the time period of one OFDM symbol is set that 264 × 12 = 3168. Fast Fourier Transform (FFT) is performed on 3168 points. In this case, a corresponding frequency domain symbol on 3168 subcarriers can be obtained. As shown in FIG. 3, the sensing signal is sparse in the frequency domain. The sensing signal may occupy only one subcarrier for every four subcarriers. The remaining subcarriers may be used for transmitting communication signals. When these subcarriers are filled by data, the subcarriers may be filled with zeros to 4096 points. Then Inverse Fast Fourier Transform (IFFT) is performed on the 4096 points to the time domain. Additionally, since the sensing signal may keep unchanged for a long time, the time domain signal of the sensing signal (i.e., the IFFT result after the frequency domain data signal is set to 0) may be stored. In the time domain, the sensing signal is superimposed with each one of the communication signals in the time domain.

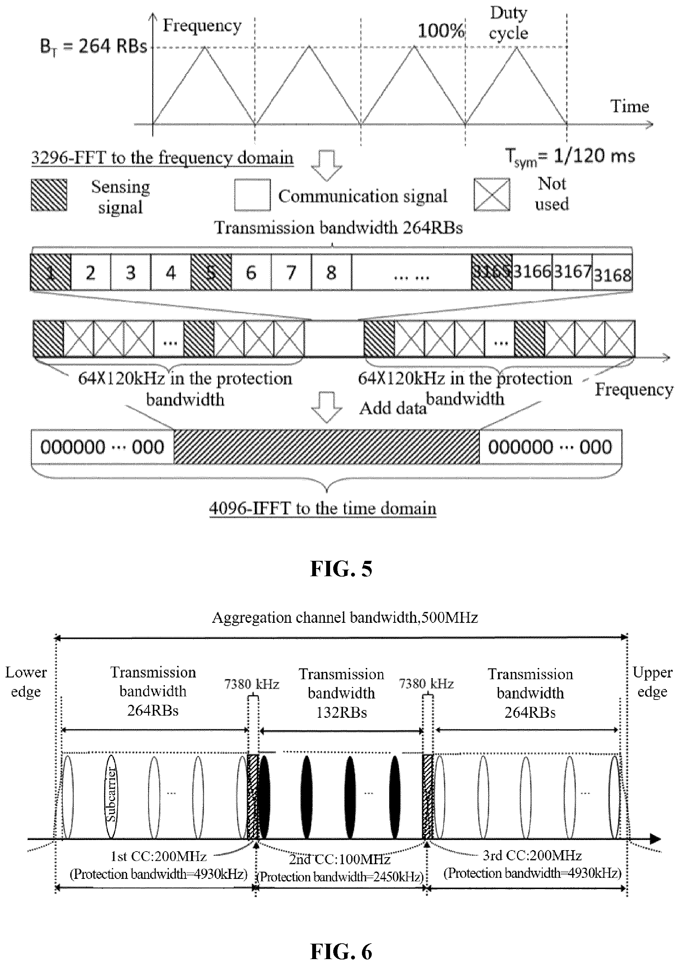

In an exemplary embodiment, the sensing signal of the first transmission signal is composed of four sawtooth Chirp signals sent on the transmission bandwidth of 400 MHz within the time period of one symbol, with the subcarrier spacing of 120 kHz. The sensing signal occupies the transmission bandwidth of the first transmission signal and the protection bandwidth of the first transmission signal. FIG. 5 is another schematic diagram of a first transmission signal according to an embodiment of the present application. Referring to FIG. 5, the transmission bandwidth in the embodiment of the present application may be 264 RBs, and the protection bandwidth on each side is 4930 kHz. For definitions of the channel bandwidth, the transmission bandwidth and the protection bandwidth, reference may be made to FIG. 4. In the embodiment of the present application, the sensing signal may occupy all the transmission bandwidth and part of the protection bandwidth. From another perspective, the protection bandwidth of the sensing signal is different from the protection bandwidth of the communication signal. This is mainly due to the fact that the sensing signal is sparse in the frequency domain and may be known at a receiving end. Therefore, it is possible to adopt a smaller protection bandwidth than the communication signal.

In the embodiment of the present application, multiple types of sensing signals may be synthesized through carrier aggregation. The sensing signal includes but is not limited to an FMCW-based signal, a pulse-based signal, and a low correlation sequence-based signal. A linear triangular-wave frequency modulation signal is taken as an example for description here. It is assumed that a four-period linear sawtooth-wave frequency modulation signal is included within the time T_{sym} of one OFDM symbol, where T_{sym} = 1/120 ms. The duty cycle of the signal is 100%. The sensing signal has four repetitions in the period of one OFDM symbol. Accordingly, the sensing signal is sparse in the frequency domain, and there is only one non-zero value every four points. To make the sensing signal occupy the transmission bandwidth and the protection bandwidth, the number of time-domain sampling points of the sensing signal in the time period of one OFDM symbol is set that 264 × 12 + 64 × 2 = 3296. FFT is performed on 3296 points. In this case, a corresponding frequency domain symbol on 3296 subcarriers can be obtained. As shown in FIG. 5, the sensing signal is sparse in the frequency domain. The sensing signal may occupy only one subcarrier for every four subcarrier sensing signals. The remaining subcarriers in the transmission bandwidth may be used for transmitting communication signals. When these subcarriers are filled by data, the subcarriers may be filled with zeros to 4096 points. Then IFFT is performed on the 4096 points to the time domain. Additionally, since the sensing signal may keep unchanged for a long time, the time domain signal of the sensing signal (i.e., the IFFT result after the frequency domain data signal is set to 0) may be stored. In the time domain, the sensing signal is superimposed with each one of the communication signals in the time domain.

In an exemplary embodiment, FIG. 6 is another schematic diagram of a first transmission signal according to an embodiment of the present application. The sensing signal in the first transmission signal may be a three-carrier aggregation using 200MHz + 100MHz + 200MHz within the time period of one symbol, with the subcarrier spacing of 60 kHz and with in-band continuous bandwidth. No filling is placed between component carriers. The sensing signal occupies only part of the subcarriers of the first transmission signal. Referring to FIG. 6, the subcarrier spacing is that BSCS = 60 kHz. No signal is sent on a protection bandwidth between component carriers. The transmission bandwidth corresponding to the channel bandwidth of 200MHz is 264 RBs, and the protection bandwidth on each side of the channel bandwidth of 200 MHz is 4930k Hz. The transmission bandwidth corresponding to the channel bandwidth of 100 MHz is 132 RBs, and the protection bandwidth on each side of the channel bandwidth of 100 MHz is 2450 kHz. For definitions of the channel bandwidth, the transmission bandwidth and the protection bandwidth, reference may be made to FIG. 4. In the embodiment of the present application, the communication-sensing integration signal is frequency-division and is described below in detail.

Multiple types of sensing signals may be synthesized through carrier aggregation. The sensing signal includes but is not limited to an FMCW-based signal, a pulse-based signal, and a low correlation sequence-based signal. Here, two linear sawtooth-wave frequency modulation signals are taken as examples for illustration. A linear sawtooth-wave frequency modulation signal is an FMCW-based signal whose discrete form may be expressed as that s[n] = exp(j * π * K * (nT_{S})²), where n mod N/2 = 0, 1, ..., ceil(3N/8) - 1; s[n] = 0, where n mod N/2 = ceil(3N/8), ..., N/2 - 1. The value of n ranges from 0 to N - 1. j denotes a complex number. π denotes pi. K satisfies that K=8B/3T and denotes the Chirp rate (the duration of one Chirp is changed to 3T/8, with the bandwidth B unchanged.), N denotes the number of sampling points. Tₛ denotes the sampling time. B denotes the bandwidth of a Chirp signal. T satisfies that T=NTs and denotes the duration of two linear sawtooth-wave frequency modulation signals. For the subcarrier spacing of 60 kHz, T = 1/120 ms. In the example, the protection bandwidth between CCs of the first transmission signal is not filled so that the continuity of the protocol can be maintained. Moreover, in this embodiment, the sensing signal and the communication signal are transmitted in the same OFDM symbol. Accordingly, the reserve of the protection bandwidth is to reduce the interference of data transmission. These Chirp signals using carrier aggregation may use transmission bandwidths of three CCs. However, due to the fact that Chirp signals are usually contiguous in the frequency spectrum, this manner of not occupying the protection bandwidth between CCs requires setting the data on the protection bandwidth to zero, causing some distortion. The impact of this distortion is very limited because compared to a transmission bandwidth, the protection interval occupies a very small bandwidth.

In the embodiment of the present application, N = 4204, and B = NBscs. Since it is known that T = 1/60 ms, it can be obtained that Ts = BIT and K = BIT so that two linear sawtooth-wave frequency modulation signals s[n] are generated. Since the transmitted sensing signal is repetitive in the time domain, the frequency domain sequence of the IFFT corresponding to the transmitted sensing signal is sparse, with 0 periodically appearing, as shown in FIG. 6. For the example of two linear sawtooth-wave frequency modulation signals, the repetition of the two linear sawtooth-wave frequency modulation signals results in one 0 appearing at the second position of every two points in the frequency domain. This position where 0 appears can be used for data transmission. Therefore, discrete Fourier transform is performed on s[n]. The resulting S[k] is sparse. Finally, the first 264 × 12 numbers of the sparse S [k] are used for filling each resource element (RE) in the 264 RBs bandwidth in the first CC. The middle 132 × 12 numbers are used for filling each RE in the 66 RBs bandwidth of the second CC. The last 264 × 12 numbers are used for filling each RE in the 264 RBs bandwidth of the third CC. At this time, transmission bandwidths of the three CCs are filled with some subcarriers, and subcarriers not used by the sensing signal may be used for transmitting the communication signal. An OFDM symbol generated according to the normal OFDM processing flow is a large bandwidth sensing signal with minimal distortion. The first CC and the third CC are filled with zeros on the frequency domain sequence to 4096 points. Then IFFT is performed on the 4096 points so that the first CC and the third CC are transformed to the time domain. Finally, the first CC and the third CC are mixed with respective carriers and are moved to corresponding frequency bands. The second CC is filled with zeros the frequency domain sequence to 2048 points. Then IFFT is performed on the 2048 points so that the second CC is transformed to the time domain. Finally, the second CC is mixed with a respective carrier and is moved to a corresponding frequency band. Additionally, since the sensing signal does not need to change frequently, the time domain sequence of the sensing signal can be stored after the sensing signal is calculated and generated in one time to be used for being superimposed with the communication signal not using subcarrier filling in the time domain. Then frequency mixing is performed for transmission.

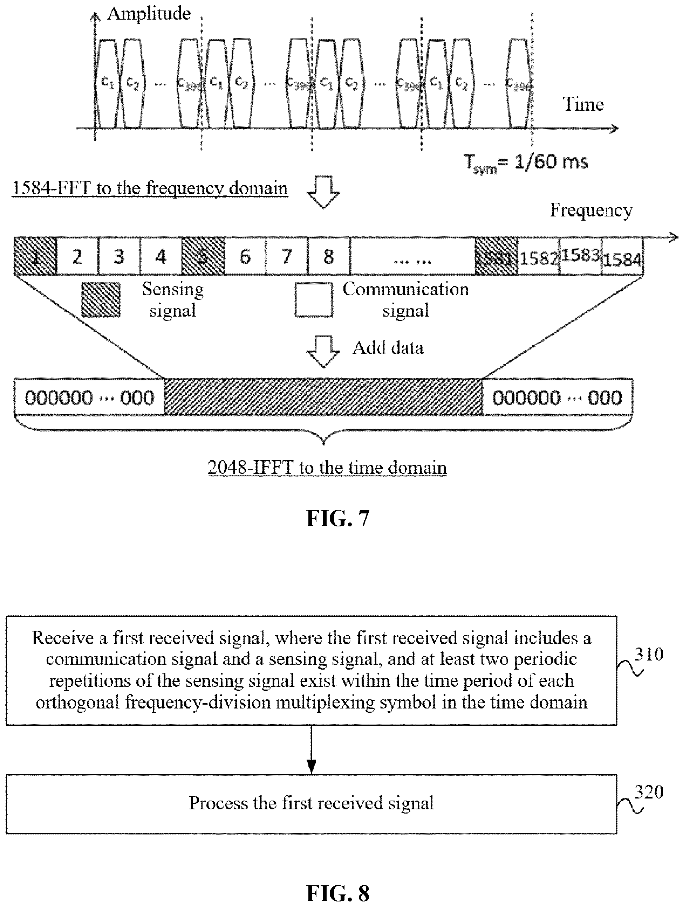

In an exemplary embodiment, the sensing signal of the first transmission signal is composed of four pulse signals or sequence signals sent on the transmission bandwidth of 100 MHz within the time period of one symbol, with the subcarrier spacing of 60 kHz. The sensing signal occupies only the transmission bandwidth of the first transmission signal. FIG. 7 is another schematic diagram of a first transmission signal according to an embodiment of the present application. Referring to FIG. 7, the transmission bandwidth in the embodiment of the present application may be 132 RBs, and the protection bandwidth on each side is 2450 kHz. For definitions of the channel bandwidth, the transmission bandwidth and the protection bandwidth, reference may be made to FIG. 4. In the embodiment of the present application, multiple types of sensing signals may be synthesized through carrier aggregation. The sensing signal includes but not is limited to an FMCW-based signal, a pulse-based signal, and a low correlation sequence-based signal. A pulse signal and a sequence signal are taken as an example for description here. It is assumed that a four-period pulse signal or sequence signal is included within the time T_{sym} of one OFDM symbol, where T_{sym} = 1/60 ms. In this example, a single pulse signal or sequence signal may be expressed as [c₁, c₂, ..., c₃₉₆]. When only n consecutive values of this row vector are non-zero (n is a positive integer far less than 396, for example, n is less than 40), this signal may be considered as a pulse signal. In other more general cases, the signal may be considered as a sequence signal which generally uses a low-correlation sequence, such as a pseudo-random sequence, a Gold sequence, or a Zadoff-Chu sequence. The sensing signal has four repetitions in the period of one OFDM symbol. Accordingly, the sensing signal is sparse in the frequency domain, and there is only one non-zero value every four points. To make the sensing signal in the transmission bandwidth, the number of time-domain sampling points of the sensing signal in the time period of an OFDM symbol is set that 132 × 12 = 1584. FFT is performed on 1584 points. In this case, a corresponding frequency domain symbol on 1584 subcarriers can be obtained. As shown in FIG. 7, the sensing signal is sparse in the frequency domain. The sensing signal may occupy only one subcarrier for every four subcarriers. The remaining subcarriers may be used for transmitting data signals. When these subcarriers are filled by data, the subcarriers may be filled with zeros to 2048 points. Then IFFT is performed on the 2048 points to the time domain. Additionally, since the sensing signal may keep unchanged for a long time, the time domain signal of the sensing signal (i.e., the IFFT result after the frequency domain data signal is set to 0) may be stored. In the time domain, the sensing signal is superimposed with each one of the communication signals in the time domain.

FIG. 8 is a flowchart of a signal receiving method according to an embodiment of the present application. The embodiment of the present application is applicable to receiving communication-sensing integration signals. The signal receiving method may be performed by an information receiving apparatus. The apparatus may be implemented by software and/or hardware. Referring to FIG. 8, the signal receiving method provided in the embodiment of the present application includes the operations below.

In operation 310, a first received signal is received. The first received signal includes a communication signal and a sensing signal. At least two periodic repetitions of the sensing signal exist within the time period of each orthogonal frequency-division multiplexing symbol in the time domain.

The first received signal may be a received communication-sensing integration signal. The first received signal may simultaneously have functions of both the communication signal and the sensing signal. The first received signal may actively recognize and analyze characteristics of a radio channel while transmitting information on the radio channel, thereby perceiving physical characteristics of the surrounding environment and achieving the sensing function. The sensing signal may be a signal for perceiving physical characteristics of the surrounding environment and may be a part of the first received signal.

In the embodiment of the present application, the first received signal of communication-sensing integration may be received. The first received signal may include the communication signal with the communication function and the sensing signal with the sensing function. The sensing signal may be sent repeatedly at least twice within the time period corresponding to each OFDM symbol in the time domain.

In operation 320, the first received signal is processed.

The first received signal may be processed so that communication data in the communication signal and sensing data in the sensing signal are acquired. Processing of the first received signal may include simultaneously processing the communication signal and the sensing signal, or separating the first received signal into the communication signal and the sensing information and then separately processing the communication signal and the sensing signal.

In the embodiment of the present application, the first received signal is received. The first received signal includes the communication signal and the sensing signal. At least two periodic repetitions of the sensing signal exist within the time period of each orthogonal frequency-division multiplexing symbol in the time domain. The first received signal is processed, implementing the receiving of the first received signal. The multiplexing of the sensing signal in the time period of each orthogonal frequency-division multiplexing symbol can enhance the utilization rate of transmission resources of the perceptual signal. Periodic repetitions are carried out within the time period of each orthogonal frequency-division multiplexing symbol, helping distinguish different sensing signals and improving the accuracy of sensing data acquisition.

On the basis of the aforementioned embodiments of the present application, the sensing signal is configured to acquire channel information and environmental information. The environmental information includes at least one of: distance information, Doppler information, frequency information, angle information, or imaging information.

On the basis of the aforementioned embodiments of the present application, the communication signal and the sensing signal are located in different subcarriers for orthogonal frequency-division multiplexing.

On the basis of the aforementioned embodiments of the present application, the number of periodic repetitions is N = 2^{m}, where m is a positive integer.

On the basis of the aforementioned embodiments of the present application, the sensing signal is formed by aggregating at least two carriers.

On the basis of the aforementioned embodiments of the present application, at least one sensing signal is generated in the time domain in advance and each of the at least one sensing signal is superimposed with a communication signal on a respective orthogonal frequency-division multiplexing symbol among different orthogonal frequency-division multiplexing symbols in the time domain. The at least one sensing signal is transmitted repeatedly within time periods of the different orthogonal frequency-division multiplexing symbols.

In the embodiment of the present application, the sensing signal in the first received signal may be generated at a different time from the communication signal in the first received signal and may be uploaded in advance in the time domain and be superimposed with a communication signal on a respective orthogonal frequency-division multiplexing symbol among different orthogonal frequency-division multiplexing symbols. The sensing signal in each orthogonal frequency-division multiplexing symbol may be transmitted repeatedly.

On the basis of the aforementioned embodiments of the present application, the sensing signal occupies a transmission bandwidth of the first received signal in the frequency domain and a protection bandwidth of the first received signal in the frequency domain or occupies the transmission bandwidth of the first received signal in the frequency domain.

On the basis of the aforementioned embodiments of the present application, the sensing signal includes at least one of: a frequency modulated continuous wave-based signal, a pulse-based signal, or a low correlation sequence-based signal.

On the basis of the aforementioned embodiments of the present application, the frequency modulated continuous wave-based signal includes at least one of: a linear sawtooth-wave frequency modulation signal, a linear triangular-wave frequency modulation signal, or a segmental linear frequency modulation signal.

On the basis of the aforementioned embodiments of the present application, the low correlation sequence-based signal includes at least one of the following sequences: a pseudo-random sequence, a Gold sequence, or a Zadoff-Chu sequence.

On the basis of the aforementioned embodiments of the present application, the duty cycle P of the sensing signal is in the range of 0 < P ≤ 100%.

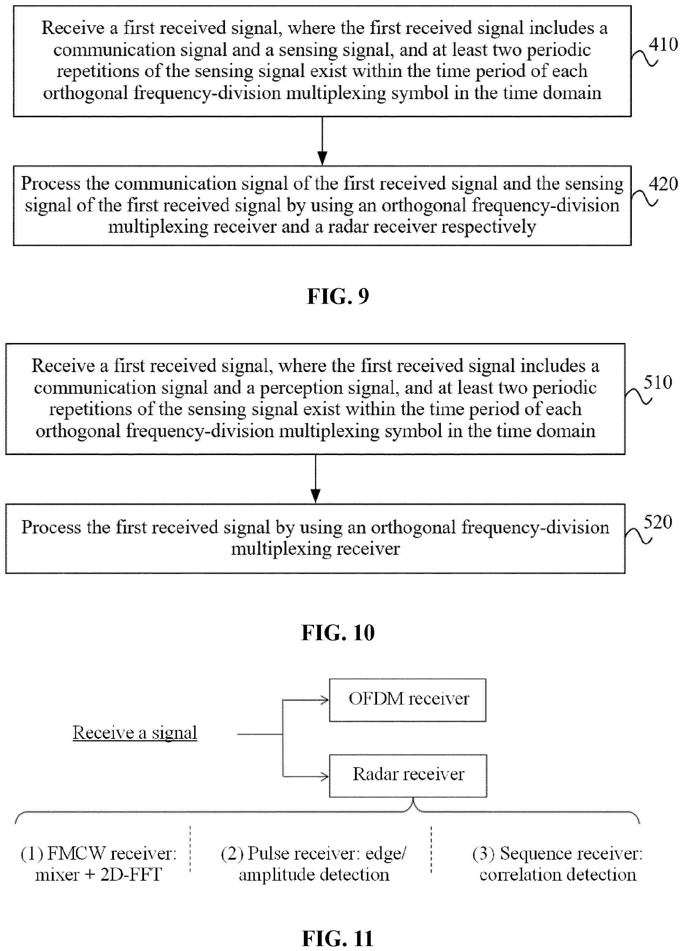

FIG. 9 is another flowchart of a signal receiving method according to an embodiment of the present application. The embodiment of the present application is described based on the aforementioned embodiments of the present application. Referring to FIG. 9, the signal receiving method provided in the embodiment of the present application includes the operations below.

In operation 410, a first received signal is received. The first received signal includes a communication signal and a sensing signal. At least two periodic repetitions of the sensing signal exist within the time period of each orthogonal frequency-division multiplexing symbol in the time domain.

In operation 420, the communication signal of the first received signal and the sensing signal of the first received signal are processed by using an orthogonal frequency-division multiplexing receiver and a radar receiver respectively.

In the embodiment of the present application, the communication signal of the first received signal and the sensing signal of the first received signal may be processed separately. The first received signal may be sent to the orthogonal frequency-division multiplexing receiver so that the orthogonal frequency-division multiplexing receiver processes the communication signal in the first received signal. The first received signal may be sent to the radar receiver so that the radar receiver processes the sensing signal.

On the basis of the aforementioned embodiments of the present application, the step of processing the sensing signal of the first received signal by using the radar receiver includes performing frequency mixing on the first received signal to acquire a baseband signal and performing two-dimensional Fourier transform on the baseband signal.

The frequency mixing may be the process of mixing component carriers with different frequencies and obtaining a signal with another frequency. The baseband signal may be a frequency band inherent to an original signal at a source. The two-dimensional Fourier transform may be the processing of transforming a time domain signal to a frequency domain signal.

The first received signal may be processed by using the radar receiver. The frequency mixing may be performed on the first received signal using multiple component carriers to acquire the original baseband signal. The two-dimensional Fourier transform may be performed on the acquired baseband signal so that the baseband signal is transformed from the time domain to the frequency domain.

On the basis of the aforementioned embodiments of the present application, the step of processing the sensing signal of the first received signal by using the radar receiver includes the step below.

Pulse detection is performed on the first received signal. The pulse detection includes at least one of: rising edge detection, falling edge detection, or amplitude detection.

In the embodiment of the present application, after the radar receiver acquires the sensing signal, the radar receiver may perform the pulse detection on the sensing signal, including one or more of the rising edge detection on the sensing signal, the falling edge detection on the sensing signal, or the amplitude detection on the sensing signal.

On the basis of the aforementioned embodiments of the present application, the step of processing the sensing signal of the first received signal by using the radar receiver includes the operations below.

Carrier frequency mixing is performed on the first received signal to acquire a baseband signal. Sequence correlation is performed on the first received signal or the baseband signal, and detection is performed according to a correlation peak of the sequence correlation.

In the embodiment of the present application, the radar receiver performs the frequency mixing on the first received signal to obtain the baseband signal. The sequence correlation may be performed on the baseband signal or the first received signal. The detection may be performed according to the correlation peak.

FIG. 10 is another flowchart of a signal receiving method according to an embodiment of the present application. The embodiment of the present application is described based on the aforementioned embodiments of the present application. Referring to FIG. 10, the signal receiving method provided in the embodiment of the present application includes the operations below.

In operation 510, a first received signal is received. The first received signal includes a communication signal and a sensing signal. At least two periodic repetitions of the sensing signal exist within the time period of each orthogonal frequency-division multiplexing symbol in the time domain.

In operation 520, the first received signal is processed by using an orthogonal frequency-division multiplexing receiver.

In the embodiment of the present application, the first received signal may be processed directly by using the orthogonal frequency-division multiplexing receiver. The communication signal in the first received signal and the sensing signal in the first received signal do not need to be separated, and the first received signal is processed directly by using the orthogonal frequency-division multiplexing receiver.

On the basis of the aforementioned embodiments of the present application, the step in which the first received signal is processed by using the orthogonal frequency-division multiplexing receiver includes the operations below.

Fast Fourier transform is performed on the first received signal to separate the communication signal and the sensing signal. Frequency-domain processing is performed on the sensing signal, or inverse Fourier transform and time-domain processing are sequentially performed on the sensing signal.

In the embodiment of the present application, the first received signal may be transformed from the time domain to the frequency domain through the Fast Fourier transform by using the orthogonal frequency-division multiplexing receiver. Moreover, the first received signal in the frequency domain is separated into the communication signal and the sensing signal. The inverse Fourier transform may be performed on the extracted sensing signal. The sensing signal is transformed from the frequency domain to the time domain, and the extracted sensing signal is processed in the time domain.

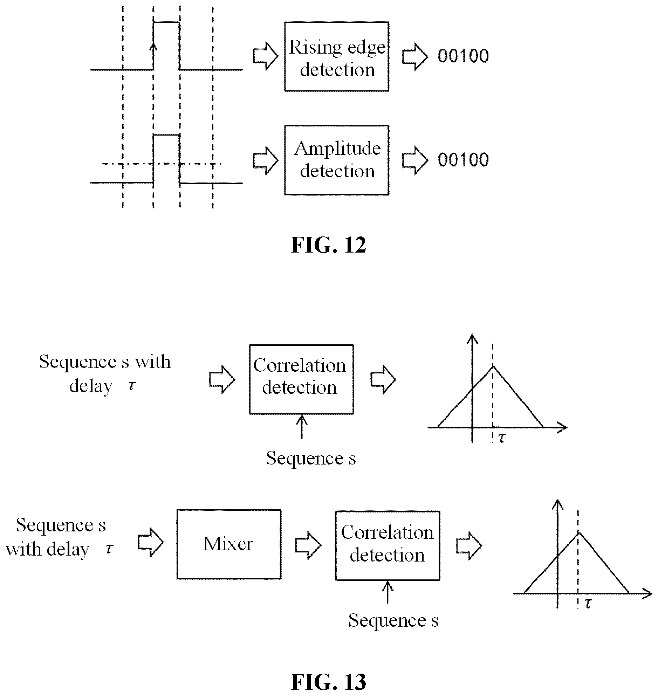

In an exemplary embodiment, FIG. 11 is a schematic diagram of processing a first received signal according to an embodiment of the present application. Referring to FIG. 11, an FMCW signal is taken for example. In the embodiment of the present application, an OFDM-based communication-sensing integration signal is detected by using a communication receiver and a sensing receiver separately. The first received signal is directly sent to an OFDM receiver and a radar receiver. The OFDM receiver is configured to process a data signal. The radar receiver is configured to process a sensing signal. According to different waveforms for transmitting sensing signals, radar receivers can be divided into three types including: FMCW-based receivers, pulse-based receivers, and low correlation sequence-based receivers. An FMCW receiver mainly performs frequency mixing and 2D-FFT at a receiving end. A pulse-based receiver mainly performs edge detection or amplitude detection on a received signal. The edge detection in the embodiment of the present application may include rising edge detection and falling edge detection. Referring to FIG. 12, the rising edge of a pulse signal may be detected in the embodiment of the present application. When the rising edge of the pulse signal exists, the signal value of the pulse signal may be 1; otherwise, the signal value of the pulse signal may be 0. The amplitude of the pulse signal may also be detected in the embodiment of the present application. When the amplitude of the pulse signal is high, the signal value of the pulse signal may be 1; when the amplitude of the pulse signal is low, the signal value of the pulse signal may be 0. A low correlation sequence-based receiver mainly performs sequence correlation detection on a received signal. Referring to FIG. 13, correlation detection on the sensing signal may include performing correlation detection directly on the received sensing signal directly to determine the time delay of the sensing signal and performing correlation detection on a baseband signal obtained after passing the received sensing signal through a mixer to acquire the time delay of the sensing signal.

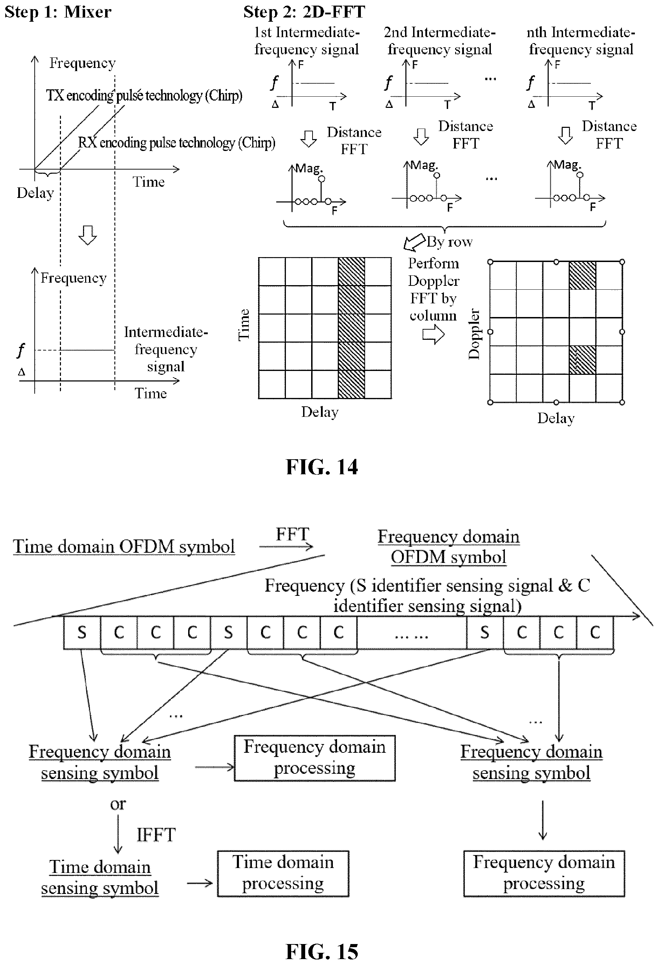

In the embodiment of the present application, FIG. 14 is a schematic diagram of processing an FMCW signal according to an embodiment of the present application. Referring to FIG. 14, two main signal processing steps of a receiver are included. Here some low noise amplification and filtering steps are omitted. In the first step, frequency mixing is performed on a received signal. Because the received signal is the delay of a transmission signal, the delay carries distance information. However, the delay is often very small and difficult to detect. Therefore, an intermediate-frequency signal may be obtained through frequency mixing. The frequency is just the frequency difference between the received signal and the transmission signal. After the frequency is obtained, the frequency can be converted into delay through the slope of the Chirp signal. In the second step, 2D-FFT is performed. Distance FFT is performed on multiple intermediate-frequency signals in the time domain separately to obtain the frequency corresponding to an intermediate-frequency signal. This frequency may be used for representing delay. Then multiple sequences after the distance FFT are taken as different row vectors of one matrix in order. Finally, Doppler FFT is performed on each column of the matrix so as to obtain a two-dimensional matrix of delay Doppler, where delay represents distance, and Doppler represents speed.

In an exemplary embodiment, FIG. 15 is another schematic diagram of processing a first received signal according to an embodiment of the present application. A sensing signal in a communication-sensing integration carrier aggregation signal may be processed by using an OFDM receiver. FFT processing may be performed on a received signal to obtain a data signal in the frequency domain. Communication signals and sensing signals may be distinguished by different subcarrier positions. On one hand, a sensing signal in the frequency domain is extracted so as to acquire sensing information by performing frequency domain processing on the sensing signal, for example, estimating a frequency domain channel and transforming the frequency domain channel to the time domain to acquire information including delay and Doppler. IFFT processing may also be performed on the sensing signal in the frequency domain to restore the sensing signal to the time domain and process the sensing signal through the time domain method. On the other hand, the sensing signal in the frequency domain may also be extracted for frequency domain equalization and demodulation.

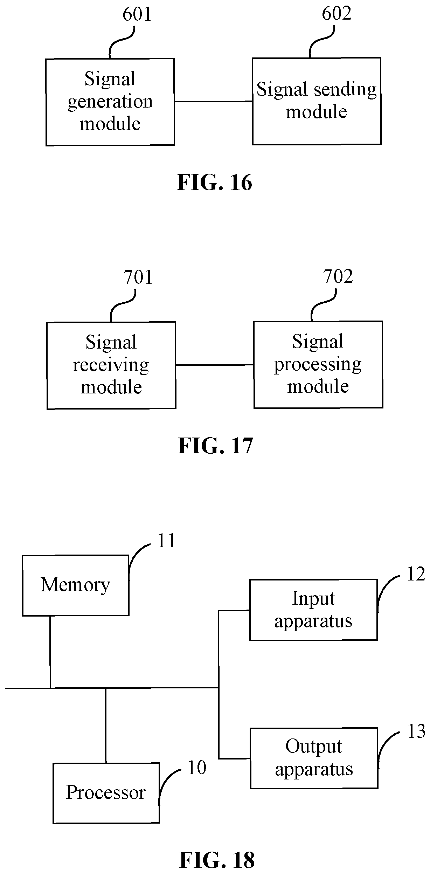

FIG. 16 is a structural diagram of a signal sending apparatus according to an embodiment of the present application. The apparatus may perform the signal sending method provided in any embodiment of the present application and has function modules and effects corresponding to the signal sending method performed. The apparatus may be implemented by software and/or hardware and includes a signal generation module 601 and a signal sending module 602.

The signal generation module 601 is configured to generate a first transmission signal. The first transmission signal includes a communication signal and a sensing signal. At least two periodic repetitions of the sensing signal exist within the time period of each orthogonal frequency-division multiplexing symbol in the time domain.

The signal sending module 602 is configured to send the first transmission signal.

On the basis of the aforementioned embodiments of the present application, the sensing signal in the apparatus is configured to acquire channel information and environmental information. The environmental information includes at least one of: distance information, Doppler information, frequency information, angle information, or imaging information.

On the basis of the aforementioned embodiments of the present application, the communication signal and the sensing signal in the apparatus are located in different subcarriers for orthogonal frequency-division multiplexing.

On the basis of the aforementioned embodiments of the present application, the number of periodic repetitions is N = 2^{m}, where m is a positive integer.

On the basis of the aforementioned embodiments of the present application, the apparatus further includes an aggregation module configured to aggregate at least two carriers to form the sensing signal.

On the basis of the aforementioned embodiments of the present application, the signal generation module 601 in the apparatus is configured to generate at least one sensing signal in the time domain in advance and superimpose each of the at least one sensing signal with a communication signal on a respective orthogonal frequency-division multiplexing symbol among different orthogonal frequency-division multiplexing symbols in the time domain. The at least one sensing signal is transmitted repeatedly within time periods of the different orthogonal frequency-division multiplexing symbols.

On the basis of the aforementioned embodiments of the present application, the sensing signal in the apparatus occupies a transmission bandwidth of the first transmission signal in the frequency domain and a protection bandwidth of the first transmission signal in the frequency domain or occupies the transmission bandwidth of the first transmission signal in the frequency domain.

On the basis of the aforementioned embodiments of the present application, the sensing signal in the apparatus includes at least one of: a frequency modulated continuous wave-based signal, a pulse-based signal, or a low correlation sequence-based signal.

On the basis of the aforementioned embodiments of the present application, the frequency modulated continuous wave-based signal in the apparatus includes at least one of: a linear sawtooth-wave frequency modulation signal, a linear triangular-wave frequency modulation signal, or a segmental linear frequency modulation signal.

On the basis of the aforementioned embodiments of the present application, the low correlation sequence-based signal in the apparatus includes at least one of the following sequences: a pseudo-random sequence, a Gold sequence, or a Zadoff-Chu sequence.

On the basis of the aforementioned embodiments of the present application, the duty cycle P of the sensing signal in the apparatus is in the range of 0 < P ≤ 100%.

FIG. 17 is a structural diagram of a signal receiving apparatus according to an embodiment of the present application. The apparatus may perform the signal receiving method provided in any embodiment of the present application and has function modules and effects corresponding to the signal receiving method performed. The apparatus may be implemented by software and/or hardware and includes a signal receiving module 701 and a signal processing module 702.

The signal receiving module 701 is configured to receive a first received signal. The first received signal includes a communication signal and a sensing signal. At least two periodic repetitions of the sensing signal exist within the time period of each orthogonal frequency-division multiplexing symbol in the time domain.

The signal processing module 702 is configured to process the first received signal.

On the basis of the aforementioned embodiments of the present application, the sensing signal in the apparatus is configured to acquire channel information and environmental information. The environmental information includes at least one of: distance information, Doppler information, frequency information, angle information, or imaging information.

On the basis of the aforementioned embodiments of the present application, the communication signal and the sensing signal in the apparatus are located in different subcarriers for orthogonal frequency-division multiplexing.

On the basis of the aforementioned embodiments of the present application, the number of periodic repetitions is N = 2^{m}, where m is a positive integer.

On the basis of the aforementioned embodiments of the present application, the sensing signal is formed by aggregating at least two carriers.

On the basis of the aforementioned embodiments of the present application, at least one sensing signal is generated in the time domain in advance, and each of the at least one sensing signal is superimposed with a communication signal on a respective orthogonal frequency-division multiplexing symbol among different orthogonal frequency-division multiplexing symbols in the time domain. The at least one sensing signal is transmitted repeatedly within time periods of the different orthogonal frequency-division multiplexing symbols.

On the basis of the aforementioned embodiments of the present application, the sensing signal occupies a transmission bandwidth of the first received signal in the frequency domain and a protection bandwidth of the first received signal in the frequency domain or occupies the transmission bandwidth of the first received signal in the frequency domain.

On the basis of the aforementioned embodiments of the present application, the sensing signal includes at least one of: a frequency modulated continuous wave-based signal, a pulse-based signal, or a low correlation sequence-based signal.

On the basis of the aforementioned embodiments of the present application, the frequency modulated continuous wave-based signal includes at least one of: a linear sawtooth-wave frequency modulation signal, a linear triangular-wave frequency modulation signal, or a segmental linear frequency modulation signal.

On the basis of the aforementioned embodiments of the present application, the low correlation sequence-based signal includes at least one of the following sequences: a pseudo-random sequence, a Gold sequence, or a Zadoff-Chu sequence.

On the basis of the aforementioned embodiments of the present application, the duty cycle P of the sensing signal is in the range of 0 < P ≤ 100%.

On the basis of the aforementioned embodiments of the present application, the signal processing module 702 includes a separation processing unit.

The separation processing unit is configured to process the communication signal of the first received signal and the sensing signal of the first received signal by using an orthogonal frequency-division multiplexing receiver and a radar receiver respectively.

On the basis of the aforementioned embodiments of the present application, the signal processing module 702 includes a frequency-division processing unit.

The frequency-division processing unit is configured to process the first received signal by using an orthogonal frequency-division multiplexing receiver.

On the basis of the aforementioned embodiments of the present application, the separation processing unit is configured to perform frequency mixing on the first received signal to acquire a baseband signal and perform two-dimensional Fourier transform on the baseband signal.

On the basis of the aforementioned embodiments of the present application, the separation processing unit is configured to perform pulse detection on the first received signal. The pulse detection includes at least one of: rising edge detection, falling edge detection, or amplitude detection.

On the basis of the aforementioned embodiments of the present application, the separation processing unit is configured to perform carrier frequency mixing on the first received signal to acquire a baseband signal, to perform sequence correlation on the first received signal or the baseband signal, and to perform detection according to a correlation peak of the sequence correlation.

On the basis of the aforementioned embodiments of the present application, the frequency-division processing unit is configured to perform Fast Fourier transform on the first received signal to separate the communication signal and the sensing signal and performing Frequency-domain processing on the sensing signal or perform inverse Fourier transform and time-domain processing sequentially on the sensing signal.

FIG. 18 is a structural diagram of an electronic device according to an embodiment of the present application. The electronic device includes a processor 10, a memory 11, an input apparatus 12, and an output apparatus 13. The electronic device may include one or more processors 10, and the electronic device including one processor 10 is shown as an example in FIG. 18. The processor 10, the memory 11, the input apparatus 12, and the output apparatus 13 in the electronic device may be connected via a bus or in other manners. The connection via a bus is shown as an example in FIG. 18.

As a computer-readable storage medium, the memory 11 may be configured to store software programs, computer-executable programs and modules, for example, modules (a signal generation module 601 and a signal sending module 602, or a signal receiving module 701 and a signal processing module 702) corresponding to the apparatus in embodiments of the present application. The processor 10 executes software programs, instructions, and modules stored in the memory 11 to perform function applications and data processing of the electronic device, that is, to perform the aforementioned signal sending method and/or signal receiving method.

The memory 11 may mainly include a program storage region and a data storage region. The program storage region may store an operating system and an application program required by at least one function. The data storage region may store data created based on the use of the electronic device. Additionally, the memory 11 may include a high-speed random-access memory and may also include a nonvolatile memory, such as at least one magnetic disk memory, a flash memory, or another nonvolatile solid-state memory. In some examples, the memory 11 may include memories that are remotely disposed relative to the processor 10 and these remote memories may be connected to the electronic device via a network. Examples of the aforementioned network include, but are not limited to, the Internet, an intranet, a local area network, a mobile communication network, and a combination thereof.

The input apparatus 12 may be configured to receive inputted digital or character information and generate key signal input related to user settings and function control of the electronic device. The output apparatus 13 may include a display device such as a display screen.

Embodiments of the present application further provide a storage medium including computer-executable instructions. When executed by a computer processor, the computer-executable instructions are configured to cause the computer processor to perform a signal sending method. The signal sending method includes the operations below.

A first transmission signal is generated. The first transmission signal includes a communication signal and a sensing signal. At least two periodic repetitions of the sensing signal exist within the time period of each orthogonal frequency-division multiplexing symbol in the time domain. The first transmission signal is sent.

Moreover/alternatively, when executed by the computer processor, the computer-executable instructions are configured to cause the computer processor to perform a signal receiving method. The signal receiving method includes the operations below.

A first received signal is received. The first received signal includes a communication signal and a sensing signal. At least two periodic repetitions of the sensing signal exist within the time period of each orthogonal frequency-division multiplexing symbol in the time domain.

From the aforementioned description of the embodiments, the present application may be implemented by means of both software and required general-purpose hardware or by means of hardware. Technical solutions of the present application may be essentially embodied in the form of a software product. The software product in a computer may be stored in a computer-readable storage medium such as a floppy disk, a read-only memory (ROM), a random-access memory (RAM), a flash memory, a hard disk or an optical disc in the computer and includes several instructions for enabling a computer device (which may be a personal computer, a server or a network device) to perform the method of the embodiments of the present application.

Units and modules included in the embodiment of the aforementioned apparatus are divided according to functional logic, and the division is not limited to this as long as the corresponding functions can be implemented. Additionally, the names of function units are only intended for distinguishing between each other and are not to limit the scope of the present application.

It is to be understood by those having ordinary skill in the art that some or all steps of the aforementioned method and function modules/units in the aforementioned system or device may be implemented as software, firmware, hardware and suitable combinations thereof.

In the hardware implementation, the division of the aforementioned function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As known to those of ordinary skill in the art, the term "the computer storage media" includes volatile and non-volatile as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital video disk (DVD) or other optical disc memories, magnetic cassettes, magnetic tapes, magnetic disk memories or other magnetic storage apparatuses, or any other medium used for storing the desired information and accessible by a computer. Moreover, as known to those of ordinary skill in the art, the communication media generally include computer-readable instructions, data structures, program modules, or other data in carriers or in modulated data signals transported in other transport mechanisms and may include any information delivery medium.

## Claims

1. A signal sending method, comprising:
generating a first transmission signal, wherein the first transmission signal comprises a communication signal and a sensing signal, and at least two periodic repetitions of the sensing signal exist within a time period of each orthogonal frequency-division multiplexing symbol in a time domain; and
sending the first transmission signal.

2. The method according to claim 1, wherein the sensing signal is configured to acquire channel information and environmental information, and wherein the environmental information comprises at least one of: distance information, Doppler information, frequency information, angle information, or imaging information.

3. The method according to claim 1, wherein the communication signal and the sensing signal are located in different subcarriers for orthogonal frequency-division multiplexing.

4. The method according to claim 1, wherein a number of periodic repetitions is N = 2^{m}, wherein m is a positive integer.

5. The method according to claim 1, further comprising:
aggregating at least two carriers to form the sensing signal.

6. The method according to claim 1, wherein generating the first transmission signal comprises:
generating at least one sensing signal in the time domain in advance, and superimposing each of the at least one sensing signal with a communication signal on a respective orthogonal frequency-division multiplexing symbol among different orthogonal frequency-division multiplexing symbols in the time domain, wherein the at least one sensing signal is transmitted repeatedly within time periods of the different orthogonal frequency-division multiplexing symbols.

7. The method according to claim 1, wherein the sensing signal occupies a transmission bandwidth of the first transmission signal in a frequency domain and a protection bandwidth of the first transmission signal in a frequency domain, or, the sensing signal occupies a transmission bandwidth of the first transmission signal in the frequency domain.

8. The method according to claim 1, wherein the sensing signal comprises at least one of: a frequency modulated continuous wave-based signal, a pulse-based signal, or a low correlation sequence-based signal.

9. The method according to claim 8, wherein the frequency modulated continuous wave-based signal comprises at least one of: a linear sawtooth-wave frequency modulation signal, a linear triangular-wave frequency modulation signal, or a segmental linear frequency modulation signal.

10. The method according to claim 8, wherein the low correlation sequence-based signal comprises at least one of the following sequences: a pseudo-random sequence, a Gold sequence, or a Zadoff-Chu sequence.

11. The method according to claim 1, wherein a duty cycle P of the sensing signal is in a range of 0 < P ≤ 100%.

12. A signal receiving method, comprising:
receiving a first received signal, wherein the first received signal comprises a communication signal and a sensing signal, and at least two periodic repetitions of the sensing signal exist within a time period of each orthogonal frequency-division multiplexing symbol in a time domain; and
processing the first received signal.

13. The method according to claim 12, wherein the sensing signal is configured to acquire channel information and environmental information, and wherein the environmental information comprises at least one of: distance information, Doppler information, frequency information, angle information, or imaging information.

14. The method according to claim 12, wherein the communication signal and the sensing signal are located in different subcarriers for orthogonal frequency-division multiplexing.

15. The method according to claim 12, wherein a number of periodic repetitions is N = 2^{m}, wherein m is a positive integer.

16. The method according to claim 12, wherein the sensing signal is formed by aggregating at least two carriers.

17. The method according to claim 12, wherein at least one sensing signal is generated in the time domain in advance and each of the at least one sensing signal is superimposed with a communication signal on a respective orthogonal frequency-division multiplexing symbol among different orthogonal frequency-division multiplexing symbols in the time domain, wherein the at least one sensing signal is transmitted repeatedly within time periods of different orthogonal frequency-division multiplexing symbols.

18. The method according to claim 12, wherein the sensing signal occupies a transmission bandwidth of the first received signal in the frequency domain and a protection bandwidth of the first received signal in a frequency domain, or, the sensing signal occupies a transmission bandwidth of the first received signal in the frequency domain.

19. The method according to claim 12, wherein the sensing signal comprises at least one of: a frequency modulated continuous wave-based signal, a pulse-based signal, or a low correlation sequence-based signal.

20. The method according to claim 19, wherein the frequency modulated continuous wave-based signal comprises at least one of: a linear sawtooth-wave frequency modulation signal, a linear triangular-wave frequency modulation signal, or a segmental linear frequency modulation signal.

21. The method according to claim 19, wherein the low correlation sequence-based signal comprises at least one of the following sequences: a pseudo-random sequence, a Gold sequence, or a Zadoff-Chu sequence.

22. The method according to claim 12, wherein a duty cycle P of the sensing signal is in a range of 0 < P ≤ 100%.

23. The method according to claim 12, wherein processing the first received signal comprises:
processing the communication signal of the first received signal by using an orthogonal frequency-division multiplexing receiver and processing the sensing signal of the first received signal by using a radar receiver.

24. The method according to claim 12, wherein processing the first received signal comprises:
processing the first received signal by using an orthogonal frequency-division multiplexing receiver.

25. The method according to claim 23, wherein processing the sensing signal of the first received signal by using the radar receiver comprises:
performing carrier mixing on the first received signal to acquire a baseband signal; and
performing two-dimensional Fourier transform on the baseband signal.

26. The method according to claim 23, wherein processing the sensing signal of the first received signal by using the radar receiver comprises:
performing pulse detection on the first received signal, wherein the pulse detection comprises at least one of: rising edge detection, falling edge detection, or amplitude detection.

27. The method according to claim 23, wherein processing sensing information of the first received signal by using the radar receiver comprises:
performing carrier frequency mixing on the first received signal to acquire a baseband signal; and
performing sequence correlation on the first received signal or the baseband signal, and performing detection according to a correlation peak of the sequence correlation.

28. The method according to claim 24, wherein processing the first received signal by using the orthogonal frequency-division multiplexing receiver comprises:
performing fast Fourier transform on the first received signal to separate the communication signal and the sensing signal; and
performing frequency-domain processing on the sensing signal, or performing inverse Fourier transform and time-domain processing sequentially on the sensing signal.

29. An electronic device, comprising:
at least one processor; and
a memory configured to store at least one program;
wherein the at least one program, when executed by the at least one processor, causes the at least one processor to perform at least one of: the signal sending method according to any one of claims 1 to 11 or the signal receiving method according to any one of claims 12 to 28.

30. A computer-readable storage medium storing at least one program executable by at least one processor, wherein the at least one program, when executed by the at least one processor, performs at least one of: the signal sending method according to any one of claims 1 to 11 or the signal receiving method according to any one of claims 12 to 28.
